# EUROPEAN PATENT APPLICATION

(11) **EP 1 164 480 A2**
(43) Date of publication of application: **19.12.2001**
(21) Application number: 01000134.5
(22) Date of filing: 01.05.2001
(51) Int. Cl.: G06F 9/46, G06F 9/50, G06F 9/54

(54) **Method, System and program product for a partitioned processing environment**

(30) Priority: 31.05.2000 US 583501
(71) Applicant: International Business Machines Corporation, Armonk, NY 10504 (US)
(72) Inventor: Temple, Joseph L. III, IBM United Kingdom Limited, Hursley, Winchester, Hampshire SO21 2JN (GB); DeGilio, Frank J., IBM United Kingdom Limited, Hursley, Winchester, Hampshire SO21 2JN (GB)
(74) Representative: Burt, Roger James, Dr.

(57) **Abstract**

A partitioned processing system is disclosed wherein a shared storage space is implemented between plural partitions running heterogeneous operating systems. The shared storage permits the partitions to inter operate at the process level. The shared storage includes a table with entries defining the rules governing how the partitions inter-operate through the shared storage. The table entries may be made by a stand-alone process running independent of the partitions, or via memory broker which may be implemented in a partition as an operating system extension. A memory client running in a partition may initiate the creation of the table entries by the memory broker. The inter-operation of the processes in the partitions may be governed by an extension of an inter process protocol known to both operating system images. Further implementations of the system include establishing a heterogeneous client server network within the system passing request and responses through the shared storage space.

## Description

This invention relates in general to partitioned data processing systems and in particular to uniprocessor and multiprocessor systems capable of running multiple operating system images in the system's partitions, wherein each of the multiple operating systems may be an image of the same operating system in a homogeneous partitioned processing environment or wherein a plurality of operating systems are supported by the multiple operating system images in a heterogeneous partitioned processing environment.

Most modern medium to large enterprises have evolved their IT infrastructure to extend the reach of their once centralised "glass house" data centre throughout, and in fact beyond the bounds of their organisation. The impetus for such evolution is rooted, in part, in the desire to interconnect heretofore disparate departmental operations, to communicate with suppliers and customers on a real-time basis, and is fuelled by the burgeoning growth of the Internet as a medium for electronic commerce and the concomitant access to interconnection and business-to-business solutions that are increasingly being made available to provide such connectivity.

Attendant to this recent evolution is the need for modern enterprises to dynamically link many different operating platforms to create a seamless interconnected system. Enterprises are often characterised by a heterogeneous information systems infrastructure owing to such factors as non-centralised purchasing operations, application-based requirements and the accretion of disparate technology platforms arising from merger related activities. Moreover, the desire to facilitate real-time extra-enterprise connectivity between suppliers, partners and customers presents a further compelling incentive for providing connectivity in a heterogeneous environment.

In response to a rapidly growing set of customer requirements, information technology providers have begun to devise data processing solutions that address these needs for extended connectivity for the enterprise data centre.

Initially, the need to supply an integrated system which simultaneously provides processing support for various applications which may have operational interdependencies, has led to an expansion in the market for partitioned multiprocessing systems. Once the sole province of the mainframe computer, these partitioned systems, which provide the capability to support multiple operating system images within a single physical computing system, have become available from a broadening spectrum of suppliers. For example, UNIX workstation provider Sun Microsystems, Inc. has recently begun offering a form of system partitioning in their high-end server the Ultra Enterprise 10000 (trademark) which is described in detail in U.S. patent no. 5,931,938 to Drogichen et al. for "Multiprocessor Computer Having Configurable Hardware System Domains" filed Dec. 12, 1996 issued Aug. 3, 1999 and assigned to Sun Microsystems, Inc. Other companies have issued statements of direction indicating their interest in this type of system as well.

This industry adoption underscores the "systems within a system" benefits of system partitioning in consolidating various computational workloads within an enterprise onto one (or a few) physical server computers, and for simultaneously implementing test and production level codes in a dynamically reconfigurable hardware environment. Moreover, in certain partitioned multiprocessing systems such as the IBM (R) S/390(R) computer system as described in the aforementioned cross-referenced patent applications, resources (including processors, memory and I/O) may be dynamically allocated within and between logical partitions depending upon the priorities assigned to the workload(s) being performed therein (IBM and S/390 are registered trademarks of International Business Machines Corporation). This ability to enable dynamic resource allocation based on workload priorities addresses long-standing capacity planning problems which have historically led data centre managers to intentionally designate an excessive amount resources to their anticipated computational workloads to manage transient workload spikes.

While these partitioned systems facilitate the extension of the data centre to include disparate systems throughout the enterprise, currently these solutions do not offer a straightforward mechanism for functionally integrating heterogeneous or homogeneous partitioned platforms into a single inter operating partitioned system. In fact, while these new servers enable consolidation of operating system images within a single physical hardware platform, they have not adequately addressed the need for inter-operability among the operating systems residing within the partitions of the server. This inter-operability concern is further exacerbated in heterogeneous systems having disparate operating systems in their various partitions. Additionally, these systems typically have not addressed the type of inter-partition resource sharing between such heterogeneous platforms which would enable a high-bandwidth, low-latency interconnection between the partitions. It is important to address these inter operability issues since a system incorporating solutions to such issues would enable a more robust facility for communications between processes running in distinct partitions so as to leverage the fact that while such application are running on separate operating system, they are, in fact, local with respect to one another.

Advantageous features are provided by the present invention which includes a partitioned computer system capable of supporting multiple heterogeneous operating system images wherein these operating system images may concurrently share a set of memory locations while each operating image maintains its own independent virtual address management. In such a manner the shared memory resource may be treated as system memory for each of the sharing partitions.

In an embodiment of the invention, the shared memory resource is independently mapped to the designated memory resource for plural inter-operating processes running in the multiple partitions. In this manner, the common shared memory space is mapped as virtual memory space in each of the partitions sharing the memory resource to appear as memory resource assigned within the partition to processes running therein, the memory is therefore available for reading an writing data during the normal course of process execution.

In a further embodiment, the shared memory resource is allocated to at least two partitions to enable said independent mapping. Moreover, in a further embodiment the allocation allows processes in the partition to share the memory based upon user or process level permission.

In yet a further embodiment of the invention, the processes executing in the plural patrons communicate with one another via the shared memory space. In still another embodiment system includes a protocol such as an extension of the UNIX IPC protocol for connecting the various processes within the partitions to the shared memory space.

In a further embodiment, the rules governing the inter-partition communication are stored in a table maintained in the shared storage space. The table entries may be implemented by a stand-alone process running independent from the operating system images in the partitions. In yet a further embodiment, the table entries are implemented by a memory broker. In further embodiments the memory broker may be implemented in a partition as an extension of the operating system image therein, alternatively, in an embodiment implementing a hypervisor layer, the memory broker may be implemented as part of the partitioning hypervisor. The memory broker establishes the table entries at the request of a memory client implemented in another of the partitions.

In another embodiment the file structures such as a pipe or queue may be implemented in the shared storage space.

In yet an other embodiment, the invention may be implemented in a system having an internal coupling facility. In such a system according to an embodiment of the invention the shared storage or memory broker may be implemented in the internal coupling facility.

By implementing a server process in one of the partitions and client processes in other partitions, the partitioned system is capable of implementing a heterogeneous single system client server network. In the embodiment, the client issues requests to the server and the server responds to client requests through the shared storage space. The requests are queued and responses buffered in the shared storage.

According to one aspect of the present invention, in a partitioned computing system having a plurality o partitions and a plurality of heterogeneous operating system images, said operating system images residing within said partitions, and a system memory and including the capability for inter-partition memory sharing between said partitions, a method is provided for implementing a client server system, said method comprising the steps of:
implementing a client applications in a first partition; and
implementing a server application in a second partition,
wherein said first and second partitions implement different operating systems.

According to a second aspect of the present invention, in a partitioned computing system having a plurality of partitions and a plurality of heterogeneous operating system images, said operating system images residing within said partitions, and a system memory, and including the capability for inter-partition memory sharing between said partitions, a client server system is provided comprising:
a client application implemented in a first partition; and
a server application implemented in a second partition,
wherein said first and second partitions implement different operating systems.

According to a third aspect of the present invention, a program storage device is provided, readable by a digital processing apparatus and tangibly embodying a program of instructions executable by the digital processing apparatus to perform method steps for use in implementing a client server system in a partitioned computing system having a plurality of partitions and a plurality of heterogeneous operating system images, said operating system images residing within said partitions, and a system memory, and including the capability for inter-partition memory sharing between said partitions, said method including the steps of :
implementing a client applications in a first partition; and
implementing a server application in a second partition,
wherein said first and second partitions implement different operating systems.

Preferably, in these first second and third aspects, said client application issues requests and said server application issues responses using said inter partition shared memory. Said requests for said server application may reside in a queue in said inter partition shared memory and said responses for said client reside in data buffers in said inter partition shared memory. A plurality of client applications in a plurality of said partitions may issue requests for said server application.

According to a fourth aspect of the present invention, in a partitioned computing system having a plurality of partitions and a plurality of operating system images, said operating system images residing within said partitions, and a system memory, a method for inter-partition memory sharing is provided, said method comprising the steps of:
designating a shared memory space in said system memory;
mapping by an operating system image in a first one of said partitions a first virtual memory space corresponding to said shared memory space; and
mapping by an operating system image in a second one of said partitions a second virtual memory space corresponding to said shared memory space.

According to a fifth aspect of the present invention, in a partitioned computing system having a plurality of partitions and a plurality of operating system images, said operating system images residing within said partitions, and a system memory, a system is provided for inter-partition memory sharing comprising:
a designated shared memory space in said system memory;
a first virtual memory space mapped by an operating system image in a first one of said partitions corresponding to said shared memory space; and
a second virtual memory space mapped by an operating system image in a second one of said partitions corresponding to said shared memory space.

According to a sixth aspect of the present invention, a program storage device is provided, readable by a digital processing apparatus and tangibly embodying a program of instructions executable by the digital processing apparatus to perform method steps for use in implementing inter-partition memory sharing in a partitioned computing system having a plurality of partitions and a plurality of operating system images, said operating system images residing within said partitions, and a system memory, said method comprising the steps of:
designating a shared memory space in said system memory;
mapping by an operating system image in a first one of said partitions a first virtual memory space corresponding to said shared memory space; and
mapping by an operating system image in a second one of said partitions a second virtual memory space corresponding to said shared memory space.

Preferably said designated shared memory space is allocated for use by said first virtual memory and said second virtual memory. Advantageously, said allocation further enables only specified user and/or system processes to use said allocated shared memory space. With advantage, said mapping by said operating system image in said first partition is independent from said mapping by said operating system image in said second partition.

Data pertaining to said allocation of said shared memory space may be stored in a table in said shared memory space.

A first process may be executed in said first partition and a second process in said second partition; and communication between said first process and said second process carried out via said shared memory space. Said communication between said first process and said second process may be accomplished via an inter-process communication protocol, such as an extension of the UNIX IPC protocol.

Entries in said table may be established by running a stand alone utility independent of said plurality of operating system images. Such entries may be established by a memory broker in accordance with rules established by a privileged user process. Said memory broker may establish said table entries at the request of a memory client implemented in at least one of said plurality of partitions.

The memory broker can be implemented as an extension to the operating system of one of said plurality of partitions. The memory broker may also be implemented in a partitioning hypervisor or implemented in an internal coupling facility.

According to one embodiment said table is read by a memory client extension to each of said operating system images to enable said mapping of said shared memory space to the corresponding virtual memory spaces.

The shared memory space may be implemented using the memory space of an internal coupling facility. Also, the shared memory space may implement file structures for message passing between said plurality of partitions. Said file structures may include a pipe or a message queue.

Advantageously the operating system image running in at least one of said partitions is a different system from the operating system image residing within said others of said partitions.

Solely by way of example, specific embodiments of the invention will now be described with reference to the accompanying drawings, in which:
FIG. 1 illustrates a general overview of a partitioned data processing system;
FIG. 2 depicts a physically partitioned processing system having partitions comprised or one or more system boards;
FIG. 3 illustrates a logically partitioned processing system wherein the logically partitioned resources are dedicated to their respective partitions;
FIG. 4 illustrates a logically partitioned processing system wherein the logically partitioned resource may be dynamically shared between a number of partitions;
FIG. 5 illustrates the structure of UNIX "Inter Process Communications";
FIG. 6 depicts an embodiment of the present invention wherein real memory is shared according to a configuration table which is loaded by a stand alone utility;
FIG. 7 depicts an extended embodiment of the present invention wherein shared real memory is allocated by a broker running in a partition of the machine, according to business, technical, and priority rules entered by a privileged user; and
FIG. 8 illustrates use of an embodiment of the present invention as an integrated heterogeneous client/server cluster.

Before discussing the particular aspects of a preferred embodiment of the present invention, it will be instructive to review the basic components of a partitioned processing system. Using this as a backdrop will afford a greater understanding as to how the present inventions particular advantageous features may be employed in a partitioned system to improve the performance thereof.

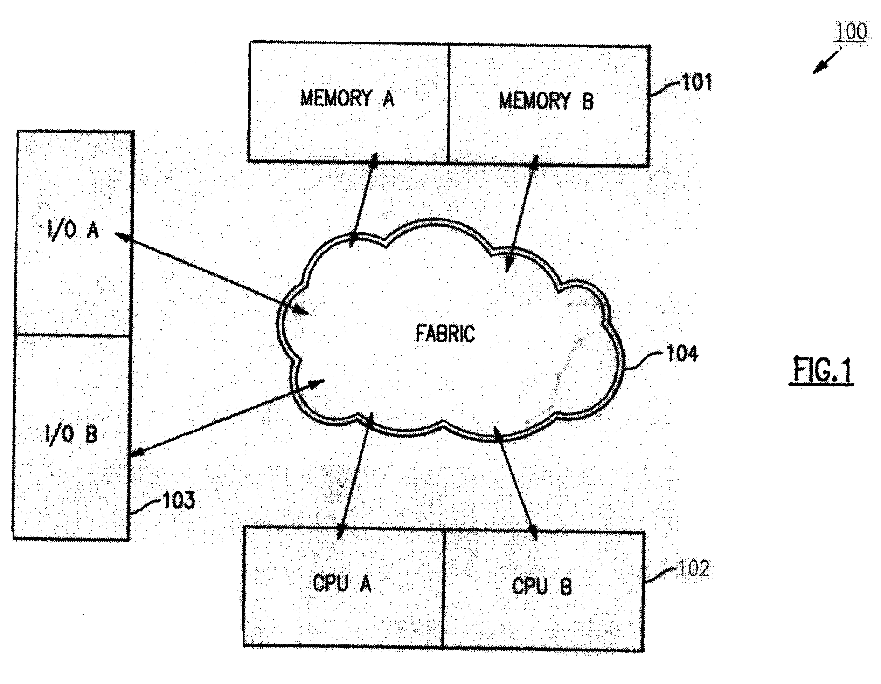

Referring to FIG. 1 an illustration of the basic elements constituting a partitioned processing system 100 is depicted. The system 100 is comprised of a memory resource block 101 which consists of a physical memory resource which is capable of being partitioned into blocks which are shown illustratively as blocks A and B as will be subsequently addressed, a processor resource block 102 which may consist of one or more processors which may be logically or physically partitioned to coincide with the partitioned memory resource 101, and an input/output (I/O) resource block 103 which may be likewise partitioned. These partitioned resource blocks are interconnected via an interconnection fabric 104 which may comprise a bus, a switching matrix etc... It will be understood that the interconnection fabric 104 may serve the function of interconnecting resources within a partition, such as connecting processor 102B to memory 101B and may also serve to interconnect resources between partitions such as connecting processor 102A to memory 101B. While the present set of figures depicts systems having two partitions (A and B) it will be readily appreciated that the such a representation has been chosen to simplify this description and further that the present invention is intended to encompass systems which may be configured to implement as many partitions as the available resources and partitioning technology will allow.

Upon examination, it will be readily understood that each of the illustrated partitions A and B taken separately comprise the constituent elements of a separate data processing system i.e., processors, memory and I/O. This fact is the characteristic that affords partitioned processing systems their unique "systems within a system" advantages. In fact, and as will be illustrated herein, the major distinction between currently available partitioned processing systems is the boundary along which the system resources may be partitioned and the ease with which resources may be moved across these boundaries between partitions.

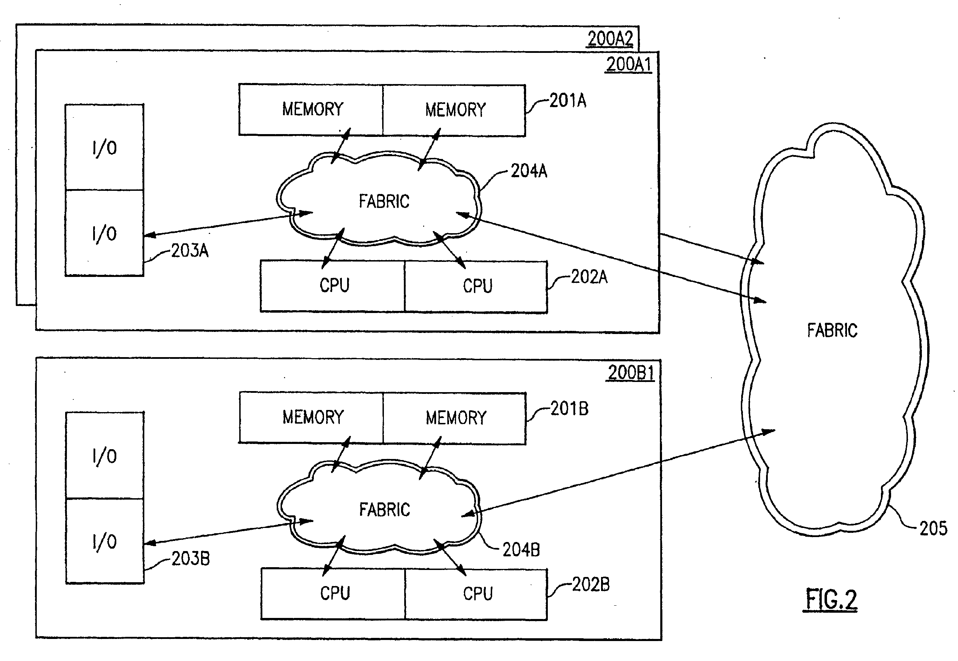

The first case, is where the boundary separating partitions is a physical boundary, which is best exemplified by the Sun Microsystems Ultra Enterprise 10000. In the Ultra Enterprise 10000, the partitions are demarked along physical boundaries, specifically, a domain or partition consists of one or more physical system boards each of which comprises a number of processors, memory and I/O devices. A domain is defined as one or more of these system boards and the I/O adapters attached thereto. The domains are in turn interconnected by a proprietary bus and switch architecture. FIG. 2 illustrates a high level representation of the elements constituting a physically partitioned processing system 200.

As can be seen via reference to FIG. 2, the system 200 includes two domains or partitions A and B. Partition A is comprised of two system boards 201_{A1} and 201_{A2}. Each system board of partition A includes memory 201A, processors 202A, I/O 203A and an interconnection medium 204A. Interconnection medium 204A allows the components on system board 201_{A1} to communicate with one another. Similarly, partition B, which is comprised of a single system board includes the same constituent processing elements: memory 201B, processors 202B, I/O 203B and interconnect 204B. In addition to the system boards grouped into partitions, there exists an interconnection fabric 205 which is coupled to each of the system boards and permits interconnections between system boards within a partition as well as the interconnection of system boards in different partitions.

The next type of system partition is termed logical partitioning, in such systems there is no physical boundary constraining the assignment of resources to the various partitions, but rather the system may be viewed as having an available pool of resources, which, independent of their physical location, may be assigned to any of the partitions. This is a distinction between a physically partitioned system wherein, for example, all of the processors on a given system board (such as system board 201_{A1}) are, of necessity, assigned to the same partition. The IBM AS/400 system exemplifies a logically partitioned dedicated resource processing system. In the AS/400 a user may include processors, memory and I/O in a given partition irrespective of their physical location. So for example, two processors physically located on the same card may be designated as resources for two different partitions. Likewise, a memory resource in a given physical package such as a card may have a portion of its address space logically dedicated to one partition and the remainder dedicated to another partition.

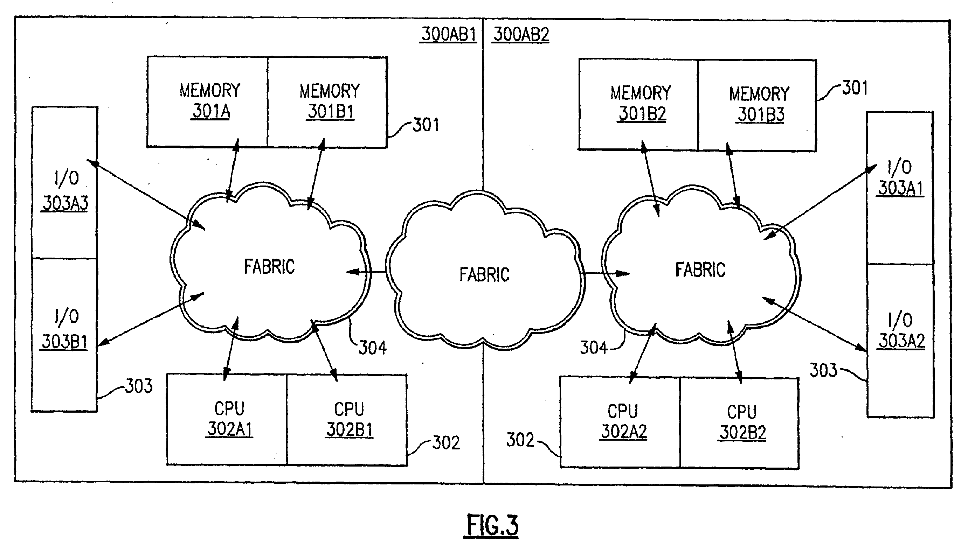

A characteristic of logically partitioned dedicated resource systems such as the AS/400 is that the logical mapping of a resource to a partition is a statically performed assignment which can only undergo change by manual reconfiguration of the system. Referring to FIG. 3, this means that processor 302_{A1} represents a processor that can be physically located anywhere in the system and which has been logically dedicated to partition A. If a user wished to re-map this processor resource to partition B the processor would have to be taken off-line and manually re-mapped to accommodate this change. The logically partitioned system provides a greater granularity for resource partitioning as it is not constrained by the limitation of a physical partitioning boundary such as the a system board which, for example, supports a fixed number of processors. However, reconfiguration of such a logically partitioned, dedicated resource system cannot be undertaken without disrupting the operation of the resource undergoing the partition remapping. It can therefore be seen, that while such a system avoids some of the limitations inherent in a physically partitioned system, it still has reconfiguration restraints associated with the static mapping of resources among partitions.

This brings us to the consideration of the logically partitioned, shared resource system. An example of such a system is the IBM S/390 computer system. A characteristic of logically partitioned, shared resource system is that a logically partitioned resource such as a processor may be shared by more than one partition. This feature effectively overcomes the reconfiguration restraints of the logically partitioned, dedicated resource system.

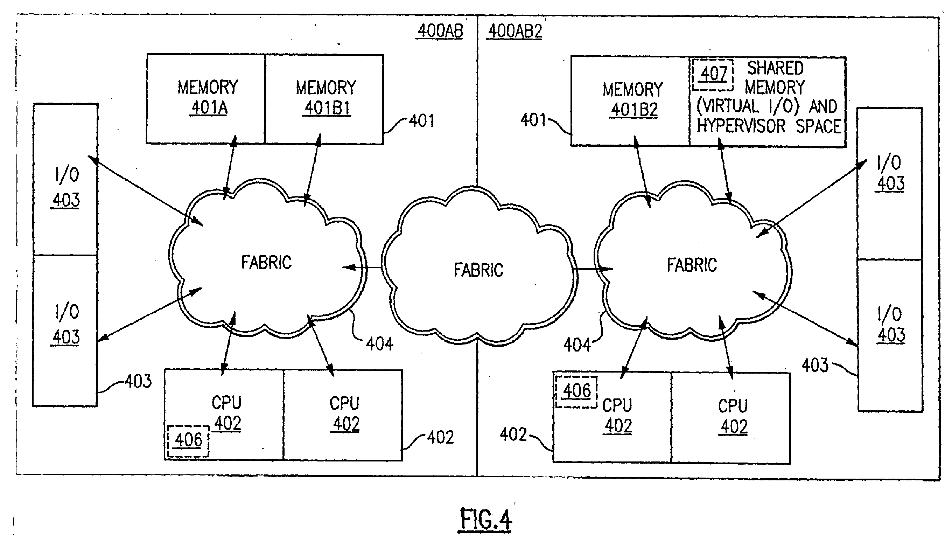

FIG. 4 depicts the general configuration of a logically partitioned, resource sharing system 400. Similar to the logically partitioned, dedicated resource system 300, memory 401, processor 402 and I/O resource 403 may be logically assigned to any partition (A or B in our example) irrespective of its physical location in the system. As can be seen in system 400 however, the logical partition assignment of a particular processor 402 or I/O 403 may be dynamically changed by swapping virtual processors (406) and I/O (407) drivers according to a scheduler running in a "Hypervisor". The virtualization of processors and I/O allows entire operating system images to be swapped in an out of operation with appropriate prioritisation allowing partitions to share these resources dynamically.

While the logically partitioned, shared resource system 400 provides a mechanism for sharing processor and I/O resource, the inter-partition sharing of memory has not been fully addressed by existing systems. This is not to say that the existing partitioned system cannot share memory between partitions. In fact, memory sharing between partitions occurs in each type of partitioned system we've described herein. However, none of these implementations provides a shared memory which may be mapped to the native memory resource of each of the partitions so that it may be used to read and/or write data in the course of normal processing activities taking place within and optimally between the respective partitions. Hence, although multiple partitions may share a common memory resource, in each of these partitioned systems the shared memory space it has been used for special purposes such as message passing, I/O and hypervisor message buffers. In essence these partitions have imposed a network paradigm on the shared resource, viewing it as a conduit rather than a repository or they have imposed an I/O like protocol to accessing the repository. In so doing, such designs fail to realise the benefit of the "systems within a system" character of partitioned processing systems.

In the physically partitioned multiprocessing systems typified by the Sun Microsystems Ultra Enterprise 10000, as described in U.S. Patent no. 5,931,938, an area of system memory may be accessible by multiple partitions at the hardware level, by setting mask registers appropriately. The Sun patent does not teach how to use this capability, nor does the Sun Solaris operating system exploit it other than as a message buffer for internalised network connections.

In the IBM S/390, as detailed in Coupling Facility Configuration Options: A Positioning Paper (copyright 1998, IBM Corp.)
http://32.97.205.4:80/marketing/gf225042.html - similar internal clustering capability is described for using commonly addressed physical memory as an "integrated coupling facility". Here the shared storage is indeed a repository, but the connection to it is through an I/O like device driver called XCF. Similarly the "SAP" processors of the S/390 share memory locations with the operating systems running in the various partitions in order to implement the I/O subsystem of the S/390 architecture. In neither of these cases is the shared memory available to application processes.

By contrast the present invention provides a means for allowing a shared storage to be mapped and used in an application's address space. This means that given a protocol for sharing, applications in heterogeneous operating systems can directly read and write the shared space, using common loads and stores. This has the advantage of raising the programming paradigm from the level of network connection semantics to application programming semantics. In other words, the invention allows shell scripts to integrate applications which heretofore required socket programming, or network gateways. The present invention also has an additional performance advantage since integration of heterogeneous applications can be accomplished without buffering or copying of data, beyond the writing and reading of the shared storage, moreover, the path length for memory sharing is much shorter than for a network protocol, even when the network code is optimised for a local connection. However, those skilled in the art will recognise that network protocols, including those optimised for local connection can be advantageously implemented with an underlying shared memory interface at the physical layer. This is useful when considering the integration of network oriented applications, trading off pathlength reduction for ease of migration.

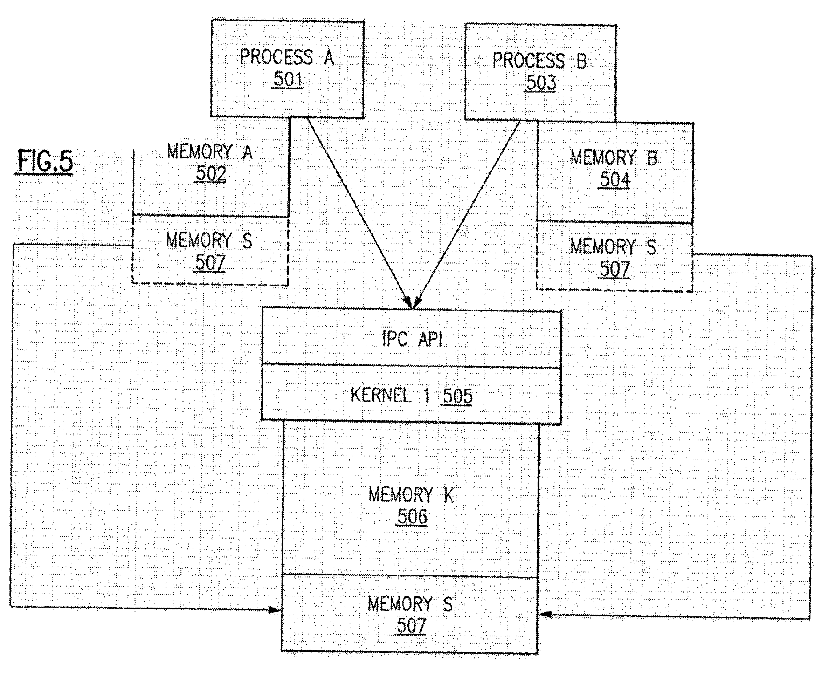

To understand how the present invention is realised, it is useful to understand inter process communications in an operating system. Referring to figure 5 Processes A (501) and B (503) each have address spaces Memory A (502) and Memory B (504). These addresses spaces have real memory allocated to them by the execution of system calls by the Kernel (505). The Kernel has its own address space Memory K (506). In one form of communication Process A and B communicate by the creation of a buffer in Memory K, by making the appropriate system calls to create, connect to and access the buffer. The semantics of these calls vary from system to system, but the effect is the same. In a second form of communication a segment of Memory S (507) is mapped into the address spaces Memory A (502) and Memory B (504). Once this mapping is complete then Processes A (501) and B (503) are free to use the shared segment of Memory S (507) according to any protocol which both processes understand.

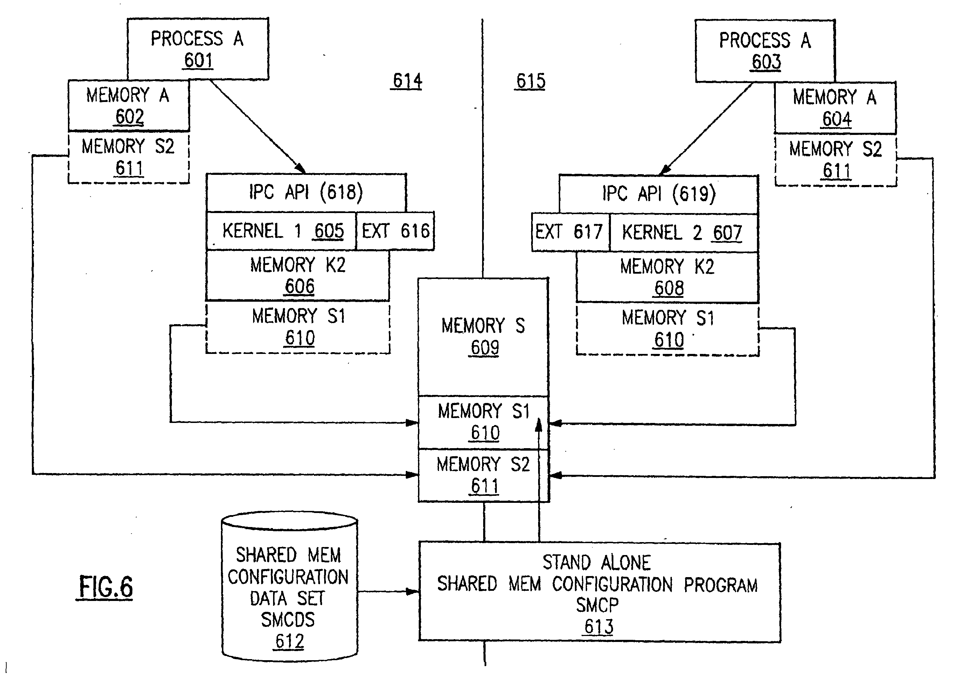

The present invention is represented by figure 6 . In which Processes A (601) and B (603) reside in different operating system domains, images, or partitions. Partition 1 (614) and Partition 2 (615). There are now Kernel 1 (605) and Kernel 2 (607) which have Memory K1 (606) and Memory K2 (608) as their Kernel memories. Memory S (609) is now a space of physical memory accessible by both Partition 1 and Partition 2. The enablement of such sharing can be according to any implementation including without limitation the UE10000 memory mapping implementation or the S/390 hypervisor implementation, or any other means to limit the barrier to access which is created by partitioning. As an alternative example, the shared memory could be mapped into the very highest physical memory addresses, with the lead ones in a configuration register defining the shared space.

By convention, Memory S (609) has a shared segment (610) which is used by extensions of Kernel 1 and Kernel 2 which is mapped into Memory K1 and Memory K2. This segment is used to hold the definition and allocation tables for segments of Memory (609), which are mapped to Memory K1(606) and Memory K2 (608) allowing cross partition communication according to the first form described above or to define a segment S2 (611) mapped into Memory A (602) and Memory B (604) according to the second form of communication described above with reference to figure 5. In an embodiment of the invention Memory S is of limited size and is pinned in real storage, however it is contemplated that memory need not be pinned, enabling a larger share storage space, so long as the attendant page management tasks were efficiently managed.

In a first embodiment of the present invention the definition and allocation tables for the shared storage are set up in memory by a stand alone utility program called Shared Memory Configuration Program (SMCP) (612) which reads data from a Shared Memory Configuration Data Set (SMCDS) (613) and builds the table in segment S1 (610) of Memory S (609) . Thus the allocation and definition of which kernels share which segments of storage is fixed and predetermined by the configuration created by the utility. The various kernel extensions then use the shared storage to implement the various inter-image, inter-process communication constructs, such as pipes, message queues, sockets and even allocating some segments to user processes as shared memory segments according to their own conventions and rules. These inter-process communications are enable through IPC APIs 618 and 619.

The allocation table for the shared storage consists of a entries which consist of image identifiers segment numbers, gid, uid, and permission bits. A sticky bit is reserved and in an embodiment is assumed to be 1. Each group, user, and image which uses a segment has an entry in the table. By convention all kernels can read the table but none can write it. At initialisation the kernel extension reads the configuration table and creates its own allocation table for use when cross image inter process communication is requested by other processes. Some or all of the allocated space is used by the kernel for the implementation of pipes, files and message queues, which it creates at the request of other processes which request inter-process communications. A portion of the shared space may be mapped by a further kernel extension into the address spaces of other processes for direct cross system memory sharing.

The allocation, use of, and mapping shared memory to virtual address spaces is done by each kernel according to its own conventions and translation processes, but the fundamental hardware locking and memory sharing protocols are driven by the common hardware design architecture which underlies the rest of the system.

The higher level protocols must be common in order for communication to occur. In the preferred embodiment this is done by having each of the various operating systems images implement the UNIX IPC (Inter Process Communications) API with the extension identifying the request as cross image. This extension can be by parameter or by separate new identifier/command name.

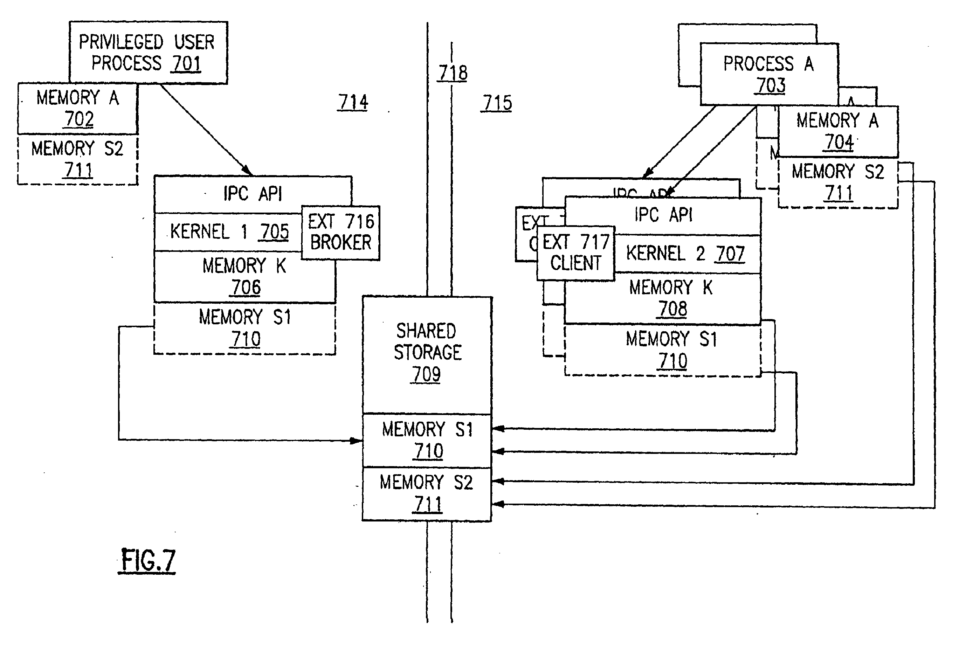

In another embodiment of the present invention illustrated by figure 7, Kernel 1 705 has an extension 716 which functions as a memory broker which controls the allocation of shared space according to security, business, and resource allocation rules determined by a privileged user process 701. Kernel 2 through Kernel N (715-718) each have extensions 717 which function as memory clients which can connect to, and use shared memory allocated by the broker 716 but cannot allocate any shared memory. In a further embodiment of the present invention the broker is implemented in a proprietary environment and at least some of the clients are implemented in an open source environment. In another embodiment of the present invention the broker is implemented in the partitioning hypervisor and the clients implemented by the various operating systems using the shared memory. In all of these embodiments the allocation of shared memory is now done dynamically based on the requests made to the broker by the clients according to the rules defined by the privileged user process 701.

Regardless of the embodiment, the present invention will contain the following elements: An underlying common hardware memory sharing protocol (inherent in defining Memory s 609). A heterogeneous set of kernel extensions for memory allocation and virtual address mapping 616, 617. A common set of high level protocols for communicating through shared memory 618, 619.

In a different embodiment of the present invention the shared storage facility may implemented as an S/390 Coupling Facility. In this case the IPC functions such as PIPE, Message Queue and Files can be created as structures within the coupling facility architecture. Herein the cycles to manage the structures are run in the coupling facility rather than in the kernel extensions This may prove advantageous for some structures such as pipes between ASCII and EBCDIC partitions, since the conversion cycles would be run within the coupling facility. It also allows the Shared PIPE, QUEUE and FILE structures to be created in a scale beyond the hardware limitations for sharing real memory. As presently defined the coupling facility storage is not mapped into byte addressable "real storage" but is defined as connected by a link which addresses the coupling facility's real storage in a "page" addressable manner. However, when the coupling facility is implemented as "Internal Coupling Facility", it is effectively a partition as described above and in such a case the shared storage of the invention and indeed the broker kernel extension could run there.

The present invention, being a general purpose memory sharing facility, can be used in many ways. The common theme among such implementations is that they enable the provision of a heterogeneous client-server architecture implemented in a non-networked or single physical system setting. Historically, client-server systems implemented in a single physical system were homogeneous systems i.e.., they were implemented on a single operating platform. For example, a system which implements an Websphere Application Server for OS/390 for accessing a DB2 database utilises a client (the Web Server) and Server (the database server) for fulfilling database request from the Web server. This implementation exists completely within the OS/390 operating system. Likewise, heterogeneous client server architectures required a network implementation, the most obvious and notable example being the heterogeneous client-server architecture of the Internet. By enable an application level share memory interface within a single partition system, the present invention provides the ability to implement a heterogeneous client-server system without requiring the network implementation.

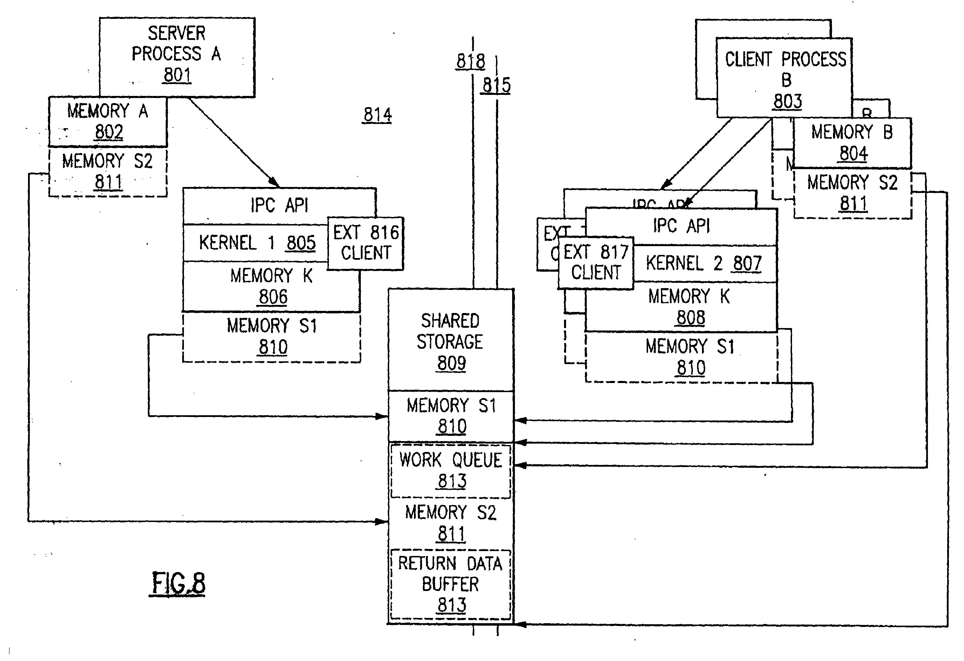

Referring to figure 8 an example of such a heterogeneous, single-system, client server implementation is shown. In the illustration, the details for the elements of which have been provided with respect to figure 7, server process A 801 is a database server (ex. DB2) running in partition 814 which is running the OS/390 operating system. This server process 801 shares memory space S2 811 with server process B 803 which is, for example, and Apache Web server running in partition 815 which is running the Linux operating system. The web server 803 is a client which makes requests against the database server 801 which in turn fulfils these requests. The communication of the request and response takes place via the shared memory space S2 811, which in effect is a cross-system call (i.e., a call within a single system). Thus, a heterogeneous client-server system is provided in the absence of a networked environment.

The foregoing construct gives rise to number of inventive implementations which take advantage of the single system client-server model. One way to implement the construct is that put the server work queue 812 in the shared storage space allowing various clients to append requests. The return data buffers 813 for the "remote" clients must then also be in the shared memory space so that the clients can access the information put there. These implementations are provided byway of illustration and while new and inventive should not be considered as limiting. Indeed it is readily understood that those of skill in the art can and will build upon this construct in various ways implementing different types of heterogeneous client-server systems within the single system paradigm.

Having described our invention in detail, that which we consider to be new and for which protection via Letters Patent is desired is presented hereinafter wherein we claim:

## Claims

1. In a partitioned computing system having a plurality o partitions and a plurality of heterogeneous operating system images, said operating system images residing within said partitions, and a system memory and including the capability for inter-partition memory sharing between said partitions, a method for implementing a client server system, said method comprising the steps of:
implementing a client applications in a first partition; and
implementing a server application in a second partition,
wherein said first and second partitions implement different operating systems.

2. In a partitioned computing system having a plurality of partitions and a plurality of heterogeneous operating system images, said operating system images residing within said partitions, and a system memory, and including the capability for inter-partition memory sharing between said partitions, a client server system comprising:
a client application implemented in a first partition; and
a server application implemented in a second partition,
wherein said first and second partitions implement different operating systems.

3. A program storage device readable by a digital processing apparatus and tangibly embodying a program of instructions executable by the digital processing apparatus to perform method steps for use in implementing a client server system in a partitioned computing system having a plurality of partitions and a plurality of heterogeneous operating system images, said operating system images residing within said partitions, and a system memory, and including the capability for inter-partition memory sharing between said partitions, said method including the steps of :
implementing a client applications in a first partition; and
implementing a server application in a second partition,
wherein said first and second partitions implement different operating systems.

4. A method according to claim 1, a system according to claim 2, or a program storage device according to claim 3, wherein said client application issues requests and said server application issues responses using said inter partition shared memory.

5. A method, system or program storage device according to claim 4, wherein said requests for said server application reside in a queue in said inter partition shared memory and wherein said responses for said client reside in data buffers in said inter partition shared memory.

6. A method, system or program storage device according to claim 4 or 5 wherein a plurality of client applications in a plurality of said partitions issue requests for said server application.

7. In a partitioned computing system having a plurality of partitions and a plurality of operating system images, said operating system images residing within said partitions, and a system memory, a method for inter-partition memory sharing, said method comprising the steps of:
designating a shared memory space in said system memory;
mapping by an operating system image in a first one of said partitions a first virtual memory space corresponding to said shared memory space; and
mapping by an operating system image in a second one of said partitions a second virtual memory space corresponding to said shared memory space.

8. In a partitioned computing system having a plurality of partitions and a plurality of operating system images, said operating system images residing within said partitions, and a system memory, a system for inter-partition memory sharing comprising:
a designated shared memory space in said system memory;
a first virtual memory space mapped by an operating system image in a first one of said partitions corresponding to said shared memory space; and
a second virtual memory space mapped by an operating system image in a second one of said partitions corresponding to said shared memory space.

9. A program storage device readable by a digital processing apparatus and tangibly embodying a program of instructions executable by the digital processing apparatus to perform method steps for use in implementing inter-partition memory sharing in a partitioned computing system having a plurality of partitions and a plurality of operating system images, said operating system images residing within said partitions, and a system memory, said method comprising the steps of:
designating a shared memory space in said system memory;
mapping by an operating system image in a first one of said partitions a first virtual memory space corresponding to said shared memory space; and
mapping by an operating system image in a second one of said partitions a second virtual memory space corresponding to said shared memory space.

10. A method according to claim 7, a system according to claim 8 or a program storage device according to claim, wherein:
said designated shared memory space is allocated for use by said first virtual memory and said second virtual memory.
